Europäisches Patentamt

European Patent Office

Office européen des brevets

(11) Veröffentlichungsnummer: **0 288 682**

**A1**

# (12) EUROPÄISCHE PATENTANMELDUNG

(21) Anmeldenummer: 88102736.1

(22) Anmeldetag: 24.02.88

(51) Int. Cl.4: **A61C 19/04**

Die Bezeichnung der Erfindung wurde geändert (Richtlinien für die Prüfung im EPA, A-III, 7.3).

(30) Priorität: 27.02.87 DE 3706473

(43) Veröffentlichungstag der Anmeldung:
02.11.88 Patentblatt 88/44

(84) Benannte Vertragsstaaten:
AT CH DE FR GB LI SE

(71) Anmelder: Ivoclar AG

FL-9494 Schaan(LI)

(72) Erfinder: Franke, Horst
Weilerstrasse 23
D-7080 Aalen(DE)
Erfinder: Kling, Brigitte
Max-Beckmann-Strasse 4
D-7929 Heidenheim 5(DE)

(74) Vertreter: Baronetzky, Klaus et al
Patentanwalte Dipl.-Ing. Splanemann, Dr. B. Reitzner, Dipl.-Ing. K. Baronetzky Tal 13
D-8000 München 2(DE)

(54) **Vorrichtung und Verfahren zur Erfassung von Kiefer-Bewegungsparametern.**

(57) Vorrichtung zur Erfassung von Bewegungsparametern des Unterfkiefers bei seiner Relativbewegung gegenüber dem Oberkiefer, sowie hierfür geeignetes Verfahren. Die miteinander verbundenen Sensoren sind in räumlich fester Beziehung zueinander und außerhalb einer gemeinsamen Achse angeordnet. Mit zwei Sensoren ist eine Meßwert und mit einem dritten sind mindestens zwei Meßdaten in voneinander verschiedenen Erfassungsrichtungen erfaßbar.

Fig.1

## Vorrichtung zur Erfassung von Bewegungsparametern des Unterkiefers bei seiner Relativbewegung gegenüber dem Oberkiefer, sowie hierfür geeignetes Verfahren

Die vorliegende Erfindung geht aus von einer Vorrichtung zum Erfassen von Bewegungsparametern des Unterkiefers bei seiner Relativbewegung gegenüber dem Oberkiefer, gemäß dem Oberbegriff von Anspruch 1 und umfaßt ein hierfür geeignetes Verfahren.

Eine derartige Vorrichtung weist einen mit dem Oberkiefer verbundenen Impulsgeber sowie drei mit dem Unterkiefer verbundene Sensoren auf. Durch die Laufzeit der abgegebenen Impulse von Geber zu den Sensoren kann der Abstand jedes Sensors von dem Geber festgestellt werden. Da die drei Sensoren im Dreieck angeordnet sind, kann aus den bekannten Abständen der Sensoren die relative Lage des Unterkiefers zum Oberkiefer in jeder Position errechnet werden.

Eine derartige Vorrichtung hat sich jedoch in der Praxis nicht bewährt. Zum einen wird die Anordnung des Sensors und der Geber im Gaumen- bzw. Zungenraum vom Patienten als unangenehm empfunden. Da geringe Laufzeitunterschiede bereits zu starken Positionsunterschieden führen, muß eine sehr exakte Bestimmung der Abstände vorgenommen werden. Dies erfordert jedoch teure und hochpräzise Bauteile. Insbesondere Temperatureinflüsse machen sich hier negativ bemerkbar.

Bei einer derartigen Vorrichtung ist es ferner nachteilig, daß elektrische Anschlußdrähte durch den Zahnbereich hindurchgeführt werden müssen, so daß ein unbeabsichtigtes Zubeißen durch den Patienten regelmäßig zur Zerstörung der Anschlüsse führt.

Aufgrund der schiefwinkligen Anordnung der Sensoren gegenüber dem Geber ist eine Koordinatentransformation erforderlich, um die Lage des Unterkiefers gegenüber dem Oberkiefer zu bestimmen.

Eine derartige Vorrichtung insbesondere bei der für die Kaufähigkeit des Patienten besonders wichtigen Bestimmung der Gleitbahn der Zähne ist zur Anfertigung von Zahnersatz weniger geeignet. Dies rührt daher, daß die Gleitbahn der Zähne durch die vorhandenen Zähne auf Bruchteile von Millimetern exakt festgelegt wird und daß hier eine sehr genaue Anpassung der neuen Zähne vorgenommen werden muß, so daß diese Vorrichtung nicht ausreicht.

Ferner ist es bekannt, mittels sog. Panthographen die Gelenkbahn von das Rotationszentrum der Kondylen zu bestimmen. Hierzu wird ein Stück Millimeterpapier seitlich an dem Kopf des Patienten - etwa im Kondylenbereich - befestigt. Ein Aufzeichnungsgerät wird an dem Unterkiefer des Patienten befestigt und zeichnet die Bewegung des Unterkiefers an dieser Stelle auf. Aus der aufgezeichneten Kurve kann auf die Gleitbahnneigung und die Lage der Kondylen geschlossen werden. Hierbei ist es jedoch nicht möglich, die exakte Bewegung der Zähne an einem Artikulator, der zur Herstellung des Zahnersatzes verwendet wird, zu simulieren.

Es ist daher Aufgabe der Erfindung, eine Vorrichtung und ein Verfahren zum Erfassen von Bewegungsparametern des Unterkiefers bei seiner Relativbewegung gegenüber dem Oberkiefer mit dem Oberbegriff von Anspruch 1 zu schaffen, bei welchem ohne komplizierte Koordinationtransformation eine Erfassung aller gleitbahnrelevanten Bewegungsparameter möglich ist.

Diese Aufgabe wird erfindungsgemäß durch Anspruch 1 bzw. Anspruch 38 gelöst.

Besonders vorteilhaft ist die Anordnung eines Sensors mit zwei Sensorelementen neben den beiden weiteren, je ein Sensorelement aufweisenden Sensoren an einem Meßpunkt. Hierdurch kann ein praxisnahes, kieferbezogenes Koordinatensystem festgelegt werden, wobei durch den Sensor, der zwei Meßdaten abgibt, Meßdaten in je unterschiedlichen Koordinatenachsen abgegeben werden.

Zur Vereinfachung der Bestimmung der relativen Position und Ausrichtung des Unterkiefers gegenüber dem Oberkiefer kann angenommen werden, daß eine seitliche Bewegung entlang der Scharnierachse bei menschlichen Kondylen nicht möglich ist. Dies trifft - abgesehen von Fällen extremer Kieferluxation - praktisch immer in guter Näherung zu.

Besonders vorteilhaft ist es, daß die Positionserfassung sich mit der maximal möglichen Genauigkeit auf die Gleitbahn richtet. Während nämlich die Kondylen-Gelenkbahn dynamischen Schwankungen unterworfen ist, da die Gelenkteile aus elastischem Knorpel bestehen, der bereits durch Muskelanspannung verformbar ist, so daß eine exakte Gelenkbahn nicht festgelegt werden kann, kann die Gleitbahn der Oberkiefer-und Unterkiefer-Zahnreihen aufeinander exakt erfaßt werden.

Durch die Verwendung der gleichen Vorrichtung in einem Artikulator, der zur Herstellung von Zahnersatz für diesen Patienten dient, werden Meßfehler, wie sie bei Verwendung einer anderen Vorrichtung zwangsläufig auftreten würden, ausgeschaltet.

Besonders vorteilhaft ist die Beschränkung des Meßbereichs der Sensoren auf die geschlossene und nahezu geschlossene Stellung des Mundes. Dadurch wird in diesem Bereich eine höhere Empfindlichkeit erzielt, so daß die Gleitbahnbewegung exakt erfaßt werden kann. Durch die Erfassung von mindestens vier Meßdaten lassen sich die Bewegungen des Unterkiefers gegenüber dem Oberkiefer erfassen, wenn von einer bekannten Gelenkbahnneigung ausgegangen wird. Bei bekanntem Abstand des mit dem Unterkiefer-Anschlußteil verbundenen Sensorteils oder Geberteils von der Scharnierachse läßt sich mit diesen Meßdaten die Bewegung des Unterkiefers gegenüber dem Oberkiefer unabhängig von einer bekannten Ausgangslage bestimmen. Durch die Anordnung der Sensor-Erfassungsrichtungen in einem orthogonalen Koordinatensystem lassen sich die Unterkieferbewegungen besonders leicht nachvollziehen.

Die bei der Unterkieferbewegung entstehende Verlagerung der Scharnierachse verfälscht das Meßeregebnis praktisch nicht. Dies liegt zum einen an der Erfassung von vier Meßdaten oder ggf. fünf Meßdaten, wenn der Abstand der Scharnierachse nicht zusätzlich gemessen werden soll. Zum anderen werden die Bewegungen des Unterkiefers zahnoberflächengetreu erfaßt. Die Meßgenauigkeit bei der Bewegung in seitlicher und in frontaler Richtung ist hierbei zumindest nicht geringer als die Meßgenauigkeit für die Bewegung in vertikaler Richtung.

Dennoch ist der Aufwand für die Erfassung gering; bereits die unmittelbare Einleitung der Meßdaten ohne Koordinatentransformation in einen XY-Plotter liefert bei geeignet gewählter Ausrichtung der Sensorelemente unmittelbar interpretierbare Ergebnisse.

Mit dem erfindungsgemäßen Verfahren gemäß Anspruch 38, bei welchem die Messung durch Bewegung des Unterkiefers gegenüber dem Oberkiefer erfolgt, ist die Bewegung im okklusionsnahen Bereich vorgesehen, wobei die Bewegung in allen horizontalen Richtungen erfolgt.

Bei dem erfindungsgemäß vorgesehenen Verfahren gemäß Anspruch 38 ist zusätzlich besonders vorteilhaft, daß der Patient bei der Messung den Unterkiefer nur in der Bennett-Bewegung und in Protrusion führen muß. Hierdurch sind die Bewegungsarten leichter reproduzierbar, und es erfolgt eine vergleichsweise genaue Erfassung der Gleitbahn. Da beide Bewegungen von dem Patienten selbst durchgeführt werden, wird auch der Einfluß der patientenspezifischen Muskelkraft berücksichtigt; diese führt nämlich aufgrund der Elastizität bestimmter Gelenkteile an den Kondylen zu in geringem Maße anderen Bewegungsabläufen als bei Durchführung der Bewegungen ohne Muskelkraft, also durch den Zahnarzt.

Vorteilhafte Weiterbildungen der Erfindung sind in der Unteransprüchen angegeben.

Bei der Ausgestaltung gemäß Anspruch 2 ist vorteilhaft, daß durch die Zusammenfassung von zwei Sensorelementen zu einem Sensor, der auf die Bewegung eines Bereichs des Geberteils anspricht, die Berechnung der Bewegung des Unterkiefers gegenüber dem Oberkiefer vergleichsweise einfach wird, insbesondere dann, wenn beide weiteren Sensoren die Bewegung des Unterkiefers an den jeweiligen Meßpunkten in der dritten Koordinate oder Erfassungsrichtung erfassen.

Bei der Ausgestaltung gemäß Anspruch 3 kann auf die Bewegung der Scharnierachse in seitlicher und frontaler Richtung geschlossen werden, wobei die Scharnierachse in einer zu der Frankfurter Horizontalebene im wesentlichen parallelen Ebene geschwenkt wird. Hierbei wird angenommen, daß der Abstand aller Sensorelemente voneinander und zu der Scharnierachse konstant ist.

Mit der Ausgestaltung von Anspruch 4 kann unter Zuhilfenahme eines Gestänges zur Erfassung des Rotationszentrums - eines sog. Gesichtsbogens - die Positionsänderung des Unterkiefers genüber dem Oberkiefer vollständig bestimmt werden.

Bei der Ausgestaltung gemäß Anspruch 5 kann die Bewegungskurve der Zahnreihen bei seitlicher und frontaler Bewegung des Unterkiefers in Okklusionsstellung zweckmäßig erfaßt werden.

Mit dem Gesichtsbogen gemäß Anspruch 6 läßt sich die Gelenkbahnneigung ermitteln, und durch Kurvenabgleich mit den vier erfaßten Meßdaten der Artikulator an die patientenspezifischen Bewegungsparameter anpassen.

Bei der Ausgestaltung gemäß Anspruch 8 ist eine leichte Erfassung der vertikalen Bewegungen bei seitlicher und frontaler Auslenkung des Unterkiefers in Okklusionsstellung möglich, da der Sensor im Inzisalbereich drei Erfassungsrichtungen in einem orthogonalen Koordinatensystem aufweisen kann. Insbesondere kann mit einer derartigen, fünf Sensorelemente aufweisenden Vorrichtung leicht festgestellt werden, an welcher Stelle der Zahnreihen eine verhältnismäßig starke Belastung der Zähne vorliegt. Bei dieser Ausgestaltung ist ein Gesichtsbogen entbehrlich, und es ist günstig, wenn die im Inzisalbereich vorgesehenen Sensorelemente je in seitlicher, frontaler und in Mundöffnungsrichtung wirken. Durch Kurvenabgleich kann anhand der so ermittelten fünf Meßwerte auf empirischem Wege der Artikulator an die patientenspezifischen Bewegungsparameter angepaßt werden.

Wenn bei der Ausgestaltung gemäß Anspruch 9 die Verbindung zwischen den Kieferanschlußteilen und dem Sensor-bzw. Geberteil lösbar gehalten ist, können die Kieferanschlußteile angepaßt werden, ohne daß der Patient die - wenn auch leichtgewichtigen - Sensor-bzw. Geberteile tragen müßte.

Bei der Ausgestaltung gemäß Anspruch 10 ist vorteilhaft, daß die Anschlußkabel nicht in den Mundraum geführt werden müssen, so daß sie nicht versehentlich beschädigt werden können. Bei entsprechend kleiner Ausbildung der Sensorelemente ist es auch möglich, die beiden seitlich der Molaren angeordneten Sensorelemente, die in Mundöffnungsrichtung arbeiten und daher vergleichsweise schmal sind, innerhalb des Mundraumes, jedoch außerhalb der Zahnreihen anzuordnen, wobei die Anschlußkabel sorgfältig zu verlegen sind.

Bei der Ausgestaltung gemäß Anspruch 11 wird der Rechenaufwand vermindert, da z.B. keine Winkel erfaßt werden müssen. Bei der Ausgestaltung gemäß Anspruch 12 kann eine Beeinflussung durch die von einem anderen Sensorelement in einer anderen Erfassungsrichtung erfaßten Daten vermieden werden, und durch die somit bewirkte vollständige Entkopplung der Erfassungsrichtung wird die Erfassungsgenauigkeit größer, denn jede Bewegung wird - vektoriell betrachtet - in die kürzesten Einzelbewegungskomponenten aufgeteilt. Die einzelnen Verktoren bzw. Bewegungskomponenten sind völlig unabhängig voneinander, und der so verbleibende Meßfehler ist minimal.

Bei der Ausgestaltung gemäß Anspruch 14 und 15 sind je die entsprechenden Sensorelemente nur im okklusionsnahen Bereich wirksam. Außerhalb des Meßbereiches sind die Sensorelemente außer Eingriff. Der Unterkiefer ist frei beweglich, so daß die erfindungsgemäße Vorrichtung sehr gut verträglich ist. Außerdem kann der Meßbereich auf den besonders relevanten okklusionsnahen Bereich konzentriert werden, so daß dort die Auflösung und Genauigkeit größer ist.

Bei der Ausgestaltung gemäß Anspruch 16 ist die je einzelne Führung vorteilhaft, die beispielsweise durch eine passende Durchtrittsausnehmung hergestellt werden kann, in der das Geberelement gleitbeweglich geführt ist.

Bei der Ausgestaltung gemäß Anspruch 17 ist günstig, daß die Geberelemente in der okklusionsnahen Stellung des Unterkiefers fest miteinander verbunden sind, und die Verbindung sich selbsttätig mit einer definierten Abreißkraft lösen kann, sobald der Abstand zwischen Unterkiefer und Oberkiefer größer wird. Mit einer derartigen Anordnung wird eine sehr exakte Aufteilung der Bewegung je in die Erfassungsrichtung jedes Sensorelements möglich. Bei geeigneter Anordnung bleibt stets die erforderliche Zuordnung des Sensorelementes zu dem zugehörigen Geberelement gewahrt, und die Sensorelemente beeinflussen sich nicht gegenseitig.

Bei der Ausgestaltung gemäß Anspruch 21 ist eine berührungslose Meßwerterfassung in Verbindung mit einer vergleichsweise geringen Baugröße ohne teure Auswertelektronik möglich. Hall-Elemente sind zudem schmutzunempfindlich und vergleichsweise leicht. Hierbei empfiehlt sich die Verwendung von Permanentmagneten für die Geberelemente.

Bei der Ausgestaltung gemäß Anspruch 22 und gemäß Anspruch 23 ist es günstig, daß die Geberelemente über Flußführungsteile von dem zentralen Dauermagneten magnetisiert werden können.

Bei der Ausgestaltung gemäß Anspruch 24 kann verhindert werden, daß eine Bewegung in einer Richtung, die von der Erfassungsrichtung des betreffenden Geberelementes verschieden ist, auf dieses übertragen werden kann. Besonders vorteilhaft ist die stets spielfreie Abstützung des Geberelementes an dem Verbindungsteil aufgrund der magnetischen Haltekraft, die genau in solchem Maße wirkt, daß zum einen eine sichere Führung gewähr leistet ist, zum anderen beim weiteren Öffnen des Mundes in den Freibereich hinein ein Trennung des Verbindungsteils von den Geberelementen möglich ist. Dies gilt auch für die Sensorelemente, deren Erfassungsrichtung senkrecht zur Mundöffnungsrichtung liegt.

Durch die Ausbildung gemäß Anspruch 25 werden durch Schrägstellung der Anschlagfläche gegenüber der zu der Erfassungsrichtung des Sensorelements senkrechten Ebene auftretende Fehler vermieden.

Besonders günstig bei der Ausgestaltung gemäß Anspruch 26 ist die Möglichkeit der reibungsarmen Führung, wobei jedoch Verkantungen durch zu großes Spiel vermieden werden müssen. Die Ausbildung des magnetisch wirksamen Bereichs als Platte, die im wesentlichen eben ist, vermeidet Linearitätsfehler.

Durch die Ausgestaltung gemäß Anspruch 27, insbesondere, wenn der magnetisch wirksame Teil des Geberelementes in Form einer konkaven Kugelkalotte ausgebildet ist, kann der Meßbereich noch besser linearisiert werden.

Bei der Ausgestaltung gemäß Anspruch 28 kann die Stärke der auf die Anschlagflächen wirkenden magnetischen Anziehungskraft in weiten Bereichen reguliert werden.

Bei der Ausgestaltung gemäß Anspruch 29 kann die hyperbolische Kennlinie des Sensorelementes weiter linearisiert werden, so daß ein linearisierter Meßbereich von etwa 10 mm möglich ist. Die Flußführungsteile können mit dem Geberelemente oder dem Sensorelement verbunden sein. Bei weiter gewünschter Miniaturisierung können die Geberelemente alternativ als starke Miniaturmagnete ausgebildet sein, deren Kennlinie elektrisch linearisiert wird.

Bei der Ausführungsform gemäß Anspruch 31 kann die Verbindung zwischen Geberelement und Geberteil auf die magnetische Haltekraft geschränkt werden, wobei der magnetische Übergangswiderstand mit geeigneten Maßnahmen eingestellt werden kann.

Beispielsweise kann die ferromagnetisches Material aufweisende Anschlagfläche mit einem dünnen Überzug, z.B. aus Kunststoffmaterial mit niedrigem Reibungskoeffizienten, überzogen und so die gewünschte Haltekraft eingestellt werden. Eine derartige Ausbildung bietet auch hygienische Vorteile.

Bei der Ausgestaltung gemäß Anspruch 32 ist es günstig, daß die Federbelastung nicht den eigentlichen Meßbereich betrifft, sondern nur dann wirkt, wenn das erforderliche seitliche Bewegungsmaß in Ausnahmefällen in den doppelten Meßbereich eines normalen Sensorelements übersteigen sollte. Dieser extreme Laterotrusionsbereich spielt für gnathologische Erkenntnisse keine Rolle.

Bei der Ausführungsform gemäß Anspruch 33 läßt sich die maximale Auslegung der Sensorelemente, die in Einfach-Ausbildung bei 4,5 mm liegen kann, verdoppeln. Die Beschränkung auf vergleichsweise kleine maximale Auslenkungen bzw. Meßbereiche hat Genauigkeits-und Linearitätsvorteile, und die gemäß Anspruch 33 vorgesehene Ausgestaltung reicht zur Erfassung der Gleitbahnbewegung bei der Protrusion und der Bennett-Bewegung bzw. Laterotrusion völlig aus. Zweckmäßigerweise kann die Umschaltung zwischen den Ausgangssignalen der Sensorelementteile elektrisch erfolgen, wie es gemäß Anspruch 35 vorgesehen ist.

Bei der Ausgestaltung gemäß Anspruch 37 ist es vorteilhaft, daß die natürlichen Bewegungen und die leichtgängige Beweglichkeit in keiner Weise behindert werden.

Bei der Ausgestaltung gemäß Anspruch 39 läßt sich die Bewegung des Unterkiefers gegenüber dem Oberkiefer bereits mit lediglich fünf Meßdaten - entsprechend fünf Sensorelementen - exakt bestimmen, während bei dieser Ausgestaltung und bekannter Scharnierachse lediglich vier Meßdaten erforderlich sind. Bei der Ausgestaltung gemäß Anspruch 40 ist die Bestimmung der Bewegung des Unterkiefers im Raum möglich. Für die störungsfreie Weiterfunktion der Zahnreihen ist es erforderlich, daß der Patient. mit dem Zahnersatz die gleichen Kaubewegungen wie mit natürlichen Zähnen machen kann, so daß eine möglichst naturgetreue Wiedergabe der Bewegungen zu erhalten versucht werden sollte.

Durch die patientenspezifische Herstellung der Kieferanschlußteile gemäß Anspruch 41 kann es vermieden werden, daß Exemplarstreuungen zwischen verschiedenen Vorrichtung berücksichtigt werden müssen.

Durch die Ausgestaltung gemäß Anspruch 43 kann gleich mit der Messung begonnen werden, nachdem die Kieferanschlußteile ausgehärtet sind.

Bei der Ausgestaltung gemäß Anspruch 44 können die Kieferanschlußteile versäubert und ggf. getrennt, wenn dies erforderlich sein sollte.

Ein Ausführungsbeispiel der Erfindung wird anhand der Figuren 1 bis 7 erläutert:

Es zeigen:

Fig. 1 eine schematische Draufsicht auf eine Unterkiefer-Anschlußteil, das mit einem Sensorteil verbunden ist;

Fig. 2 eine schematische Draufsicht auf ein Oberkiefer-Anschlußteil, das mit einem Geberteil verbunden ist;

Fig. 3 eine Seitenansicht des in Fig. 1 dargestellten Teils der erfindungsgemäßen Vorrichtung;

Fig. 4 eine Seitenansicht des in Fig. 2 dargestellten Teils der erfindungsgemäßen Vorrichtung; und

Fig. 5 eine seitliche Darstellung eines Sensorelementes in Zuordnung zu dem Geberelement und dem unmittelbar benachbarten Bereich des Geberteils; und

Fig. 6 eine Darstellung einer weiteren Ausführungsform eines Sensorelementes in gegenüber Fig. 5 weiter miniaturisierter Form; und

Fig. 7 die Kieferanschlußteile in miteinander verbundener und von dem Sensorteil und dem Geberteil getrennter Form.

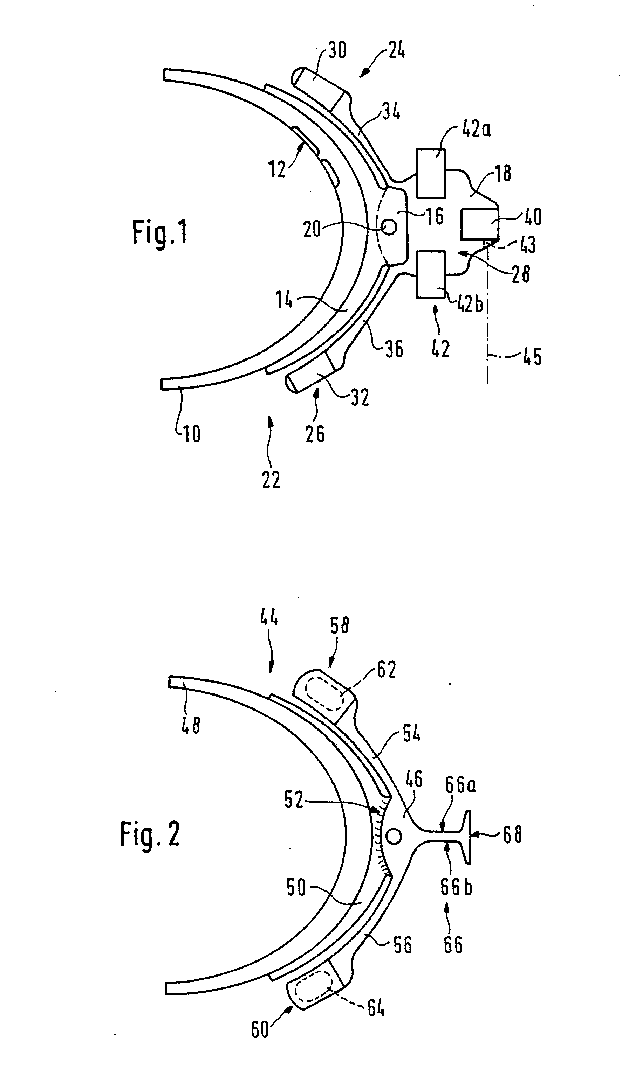

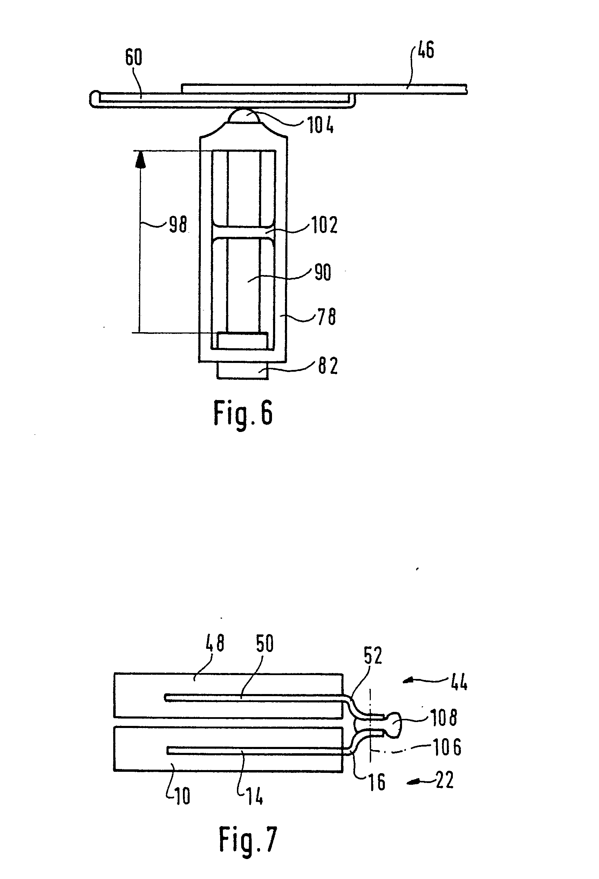

Das in Fig. 1 dargestellte Unterkiefer-Anschlußteil weist eine Masse 10 auf, die nach der Applikation am Patienten innen einen Zahnabdruck 12 entsprechend der Unterkiefer-Zahnreihe des Patienten aufweist. In die Masse 10 ist von außen eine Bißgabel 14 eingeschoben, die etwa zwei Drittel der Masse umschließt und zugleich stabilisiert. Die Bißgabel 14 weist ferner einen Anschlußbereich 16 auf, der - wie besser auf Fig. 7 ersichtlich - nach oben abgekröpft ist. Der Anschlußbereich 16 dient sowohl zur Verbindung mit der Bißgabel des Oberkiefers als auch zum Anschluß an ein Sensorteil 18 und weist hierzu eine Bohrung 20 auf, in der ein Schraubbolzen oder eine andere geeignete lösbare, aber stabile Verbindung aufgenommen sein kann. Die Bißgabel 14 und die Masse 10 bilden das Kieferanschlußteil 22 für den Unterkiefer.

Das Sensorteil 18 weist eine Mehrzahl von Sensoren auf, von denen eine Sensor 24 links seitlich und ein Sensor 26 rechts seitlich der Molaren und ein Sensor 28 frontal mittig vor den Inzisiven angeordnet ist. Der Sensor 24 und der Sensor 26 weisen je ein Sensorelement 30 und 32 auf, die nur Mundöffnungsrichtung ansprechen. Die Sensorelemente 30 und 32 sind über Tragarme 34 und 36 an dem Sensorteil 18 gelagert. Die Tragarme sind je in Mundöffnungsrichtung steif und können in anderen Richtungen weniger steif ausgebildet sein. Sie erstrecken sich unmittelbar neben der Bißgabel 14. Bei entsprechend kleiner Ausbildung können die Sensorelemente 30 und 32 an der Bißgabel anliegen, so daß sie sich bei der Messung im Mund des Patienten befinden. Wahlweise kann jedoch auch der Abstand größer gewählt werden, so daß die Sensorelemente 30 und 32 sich außerhalb des Mundes des Patienten befinden.

Der Sensor 28 weist ein frontal empfindliches Sensorelemente 40 und ein in seitlicher Richtung empfindliches Sensorelement 42 auf. Das in seitlicher Richtung empfindliche Sensorelement 42 besteht aus zwei Teilen, 42a und 42b, deren Funktion weiter unten erläutert ist. Das Sensorteil 18 ist im Bereich des Sensors 28 ziemlich dünn, da lediglich Kräfte in horizontaler Richtung, also der Haupterstreckungsrichtung des Sensorteils, aufgenommen werden müssen.

Die Versteifung der Tragarme 34 und 36 kann beispielsweise dadurch erreicht werden, daß die Tragarme U-förmig abgebogen werden, so daß das Sensorteil 18 aus einer einstückigen dünnen Platte, beispielsweise aus Aluminium, bestehen kann.

Die Sensorelemente 42a und 42b weisen je einen doppelten Betätigungsweg gegenüber den Sensorelementen 30, 32 und 40 auf. Der linearisierte Bereich dieser Sensorelemente 42a und 42b ist jedoch genauso groß wie derjenige der Sensorelements 30, 32 und 40; lediglich die Führung ist verlängert. Hierdurch wird es möglich, den Meßbereich des Sensorelementes 42 zu verdoppeln. Wenn das Ausgangssignal des Sensorelementteiles 42a größer als dasjenige des Sensorelementteiles 42b ist, ist das entsprechende Geberelement näher an dem Sensorelementteil 42a als an dem Sensorelementteil 42b, und das Sensorelementteil 42a wird für die Messung verwendet. Gleiches gilt entsprechend umgekehrt für das Sensorelementteil 42b. Diese Umschaltung kann zweckmäßigerweise elektrisch automatisch erfolgen, wobei mittels eines Komparators die Größe der Ausgangssignale der Sensoren gemessen wird. In Abhängigkeit von dem Ausgangssignal des Komparators wird dann ein Umschalt-Schaltkreis gesteuert. Zur Erzielung eines linearen Meßbereichs müß ferner die kennlinie eines der Sensorelementteile 42a bzw. 42b gespiegelt werden. Ferner sind in an sich bekannter Weise Einstelleinrichtungen für den Abgleich der beiden Kennlinien der Sensorelementteile 42a und 42b, insbesondere im Bereich des Nulldurchgangs, vorgesehen.

Seitlich neben dem Sensor 40 ist eine Ausnehmung 43 vorgesehen, in die eine Anschlußstange 45 eines Gesichtsbogen einstreckbar ist.

In Fig. 2 ist ein Kieferanschlußteil 44 für den Oberkiefer dargestellt, das mit einem Geberteil 46 verbunden ist. Das Oberkiefer-Anschlußteil 44 weist im wesentlichen den gleichen Aufbau wie das Unterkiefer-Anschlußteil 22 mit einer Masse 48 und einer Bißgabel 50 auf. An einen Anschlußbereich 52 der Bißgabel 50 ist das Geberteil 46 angeschlossen.

Sowohl das Geberteil 46 als auch das Sensorteil 18 weisen eine in frontaler Richtung kurze Bauform auf, was zum einen zur Erhöhung der Meßgenauigkeit beiträgt, des weiteren das erforderliche Gewicht vermindert und darüber hinaus vom Patienten als wenig störend empfunden wird. Wahlweise können jedoch die Anschlußbereiche 16 und 52 je lippenfreundlich und etwas länger ausgebildet sein, so daß der Sensor 28 sich eindeutig außerhalb des Mundes befindet.

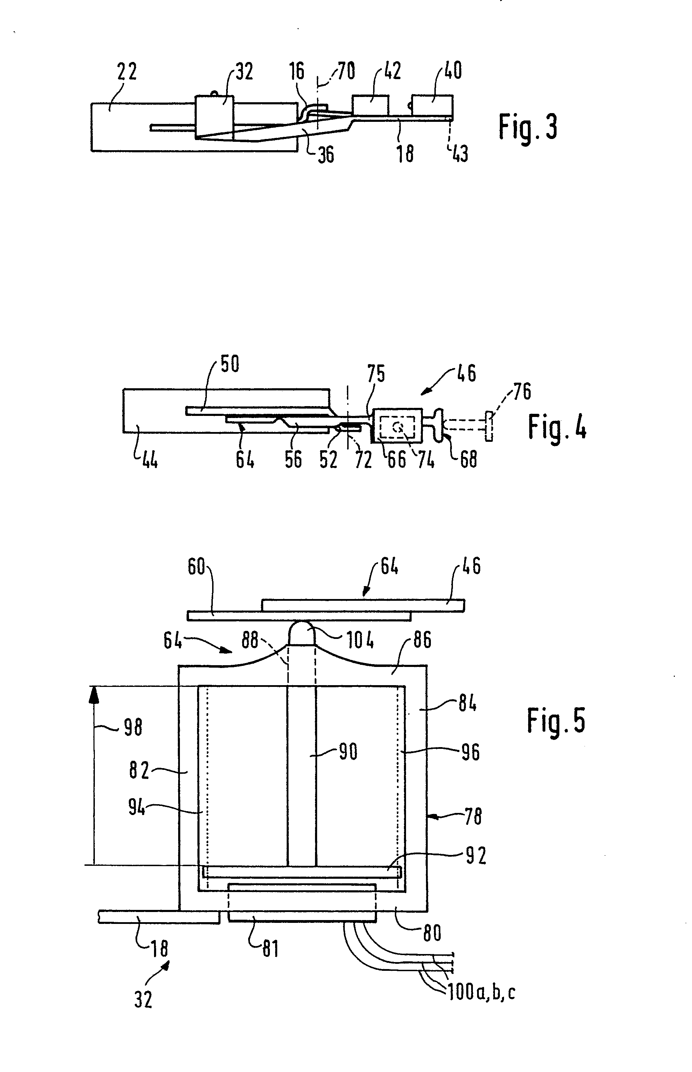

Das Geberteil 46 weist Tragarme 54 und 56 auf, die in einer den Tragarmen 34 und 36 entsprechenden Weise ausgebildet sind. Mit den Tragarmen 54 bzw. 56 sind eine Anschlagfläche 58, die dem Sensorelement 30 zugeordnet ist, und eine Anschlagfläche 60, die dem Sensorelement 32 zugeordnet ist, verbunden. Die Anschlagflächen 58 bzw. 60 sind je einem Geberelement 62 bzw. 64 zugeordnet. Der genauere Aufbau der Kombination des Sensorelementes 30 mit dem Geberelement 62 bzw. des Sensorelementes 32 mit dem Geberelement 64 ist aus Fig. 5 und 6 ersichtlich.

In einem dem Sensor 28 zugeordneten Bereich des Geberteils 46 ist eine Anschlagfläche 66 für das Sensorelement 42 und eine Anschlagfläche 68 für das Sensorelement 40 vorgesehen. Die Anschlagfläche 66 besteht aus einem dem Sensorelement 42a zugeordneten Bereich 66a und einem dem Sensorelement 42b zugeordneten Bereich 66b. Die Bereich 66a und 66b können unmittel bar aneinander angrenzen, wahlweise jedoch auch voneinander beabstandet sein, wodurch die Stabilität verbessert wird. In horizontaler Richtung ist das Geberteil 46 so steif, daß die Anschlagfläche 68, die dem Sensorelement 40 zugeordnet ist, nicht zur Seite hin ausweichen kann.

Die Darstellung gemäß Fig. 3 zeigt eine Seitenansicht des Unterkiefer-Anschlußteils 22. Gleiche Bezugszeichen weisen hier wie auch in den weiteren Figuren auf gleiche Teile hin.

Das Sensorelement 32 - wie auch das nicht dargestellte Sensorelement 30 - ist in vertikaler Richtung, also in Mundöffnungsrichtung, empfindlich. Das Sensorelement 42 ist in seitlicher Richtung, empfindlich. Das Sensorelement 40 ist in frontaler Richtung empfindlich. Alle Sensorelemente sind fest miteinander verbunden und weisen im wesentlichen den in Fig. 5 oder 6 dargestellten Aufbau auf. Das an dem Unterkiefer-Anschlußteil 22 befestigte Sensorteil 18 ist im Mund des Patienten vergleichsweise weit oben angeordnet, während umgekehrt das an dem Oberkiefer-Anschlußteil 44 befestigte Geberteil 46 vergleichsweise weit unten angeordnet ist. Hierbei dürfen sich jedoch das Sensorteil 18 und das Geberteil 46 nicht berühren; insbesondere auch nicht in der maximalen Okklusionsstellung der Zähne des Patienten. Das Unterkiefer-Anschlußteil 22 ist über einen Schraubbolzen 70 mit dem Sensorteil 18 verbunden.

In Fig. 4 sind das Oberkiefer-Anschlußteil 44 und das Geberteil 46 dargestellt, wobei die Verbindung dieser Teile über einen Schraubbolzen 72 erfolgt. Die Anschlagflächen 60, 66 und 68 sowie die nicht dargestellte Anschlagfläche 58 sind an einer solchen Stelle angeordnet und so ausgebildet, daß innerhalb des dreidimensionalen Meßbereichs der erfindungsgemäßen Vorrichtung stets die jeweilige Anschlagfläche an dem zugehörigen Geberelement anliegt. Sobald jedoch der Meßbereich für ein Sensorelement, beispielsweise für das Sensorelement 32 verlassen wird, ist es nicht erforderlich, daß die sich vertikal wird, ist es nicht erforderlich, daß die sich vertikal erstreckende Anschlagfläche 66 und die Anschlagfläche 68 noch länger an den zugehörigen Teilen von Geberelementen 74 bzw. 76 anliegen, die in Fig. 4 gestrichelt angedeutet sind. Die Anschlagflächen 66 und 68 der Geberelemente 74 und 76 und die Anschlagflächen 58 und 60 der Geberelemente 62 und 64 sind über ein Verbindungteil 75 untereinander verbunden. Die Anschlagflächen können stets so bemessen sein, daß für alle Sensorelemente der volle Meßbereich ausgenutzt werden kann, andererseits jedoch Material und Gewicht nach Möglichkeit gespart werden. Wenn ein Sensorelement außer Eingriff kommt, können hierdurch die weiteren betroffenen Sensorelemente auch automatisch in den Freibereich geraten.

In Fig. 5 ist das Sensorelement 32 in Eingriff mit dem Geberelement 64 dargestellt. Alle in dieser Ausführungsform der Erfindung verwendeten Sensorelemente und Geberelemente weisen einen ähnlichen Aufbau auf, wobei jedoch bei den Sensorelementteilen 42a und 42b der Führungsweg doppelt so lang gehalten ist.

Das Sensorelement 32 besteht aus einem Rahmen 78, der an dem Sensorteil 18 - beispielsweise durch Klebung - fest montiert ist. Der Rahmen weist einen rechteckigen Grundaufbau auf, wobei ein Grundschenkel 80 ein Hall-Element 81 aufnimmt und an beiden Enden mit Seitenschenkeln 82 und 84 verbunden ist, die ihrerseits einen Abschlußschenkel 86 tragen. In dem Abschlußschenkel 86 ist eine - gestrichelt angedeutete - Führung 88 vorgesehen, die einen Teil des Geberelementes 64 führt.

Das Geberelement 64 besteht aus einem Schaft 90 und einer Platte 92 und ist der Anschlagfläche 60 des Geberteils 46 zugeordnet. Die Platte 92 ist so groß, daß sie das Hall-Element 82 im wesentlichen abdecken kann und erstreckt sich seitlich von dem Seitenschenkel 82 bis zu dem Seitenschenkel 84. Die Platte 92, vorzugsweise aber der Schaft 90, ist als Permanent magnet ausgebildet. Da die Platte 92 und die Anschlagfläche 60 aus ferromagnetischem Material bestehen, halten diese drei das Geberelement 64 bildenden Teile aneinander, ohne daß zusätzliche Befestigungsmaßnahmen ergriffen werden müssen.

Anstelle der Führung 88 oder zusätzlich zu dieser kann die Platte 92 seitlich an dem Rahmen 78 geführt sein, wobei es ferner auch in Betracht kommt, gepunktet angedeutete Führungsflächen 94 und 96 je an den Seitenschenkeln 82 und 84 vorzusehen. Damit weisen die Seitenschenkel dann einen im wesentlichen U-förmigen Querschnitt auf, und die Platte 92 ist unverlierbar gehalten.

Der Abschlußschenkel 86 und ein Anschlag im Bereich des Hall-Elementes 81 wirken je als Anschlag für das in der Führung 88 schiebebeweglich geführte Geberelement 64.

Die Montage der Platte 92 in dem fertig - beispielsweise als Kunststoff-Spritzteil - gegossenen Rahmen 78 erfolgt einfach dadurch, daß sie seitlich eingeschoben wird. Wenn Führungsflächen 94, 96 vorgesehen sind, kann die Platte 92 zur Einführung in den Rahmen 78 leicht schräggestellt werden.

Wenn die Haltekraft des als Permanentmagnet ausgebildeten Schaftes 90 an der Platte 92 gewünschtenfalls eindeutig größer als diejenige des Schaftes 90 an der Anschlagfläche 60 ist, müssen keine weiteren Maßnahmen zur Befestigung getroffen werden, denn bereits dadurch sind alle Teile des Geberelementes unverlierbar gelagert. Gleiches gilt, wenn die Platte 92 selbst als Magnet ausgebildet ist.

Gewünschtenfalls kann die Größe der verwendeten Platten 92, Hall-Elemente 82 und des seitlich des Sensorelementens 32 angedeuteten Meßbereichs 98, der im wesentlichen der Länge der Seitenschenkel 82 und 84 abzüglich der Dicke der Platte 92 entspricht, and die gewünschten Gegebenheiten angepaßt werden.

Besonders bevorzugt ist die Verwendung eines Hall-Elementes 82 mit integriertem Verstärker, das gegenüber äußeren Störungen weniger empfindlich ist. Der elektrische Anschluß des Hall-Elementes 82 erfolgt über drei Anschlußleitungen 100a, 100b, 100c.

Die Anschlußleitungen jedes Sensors sind mit einer - nicht dargestellten - Auswertelektronik verbunden; beispielsweise mit XY-Aufzeichnungsgeräten wie Plottern, Bildschirmen, Rechnern od. dgl.

Die in Fig. 6 dargestellte Ausführungsform eines Sensorelementes 32 baut erheblich kleiner als die in Fig. 5 dargestellte. Mit den in Fig. 6 dargestellten Abmessungen kann jedoch keine Linearisierung des Hall-Elementes erreicht werden. Vielmehr liefert dieses Element eine im wesentlichen hyperbolische Kennlinie, so daß die Empfindlichkeit bei maximaler Annäherung des Geberelementes 64 an das Hall-Element 82 sehr groß ist. Mit zunehmendem Abstand nimmt die Empfindlichkeit jedoch stärker ab.

Insbesondere gegen Ende des Meßbereiches 98 ist die Empfindlichkeit bei dieser Ausführungsform erheblich geringer als bei der Ausführungsform gemäß Fig. 5. Daher wird ein entsprechend starker Permanentmagnet als Schaft 90 verwendet, ohne daß zusätzlich eine Platte vorgesehen wäre. Aufgrund der Miniaturisierung ist zur Stabilisierung des Rahmens 78 eine zusätzliche Querrippe 102 vorgesehen.

Der Schaft 90 ist bei beiden Ausführungsformen des Geberelementes 64 an seinem der Anschlagfläche 60 des Geberteils 46 nahen Ende 104 halbkugelförmig abgerundet. Zur Verminderung der Gleitreibung ist auf der Anschlagfläche 60 ein Kunststoffüberzug 106 in Form einer Lackschicht aufgebracht. Diese wirkt abstandshaltend zwischen dem ferromagnetischen Geberteilbereich und dem als Permanentmagnet ausgebildeten Schaft 90, so daß das Ende 104 mit ganz geringem Kraftaufwand auf der Anschlagfläche 60 gleiten kann. Die Halterkraft muß jedoch auf jeden Fall größer als die Reibung des Schaftes 90 in der Führung 88 sein.

Das in Fig. 6 dargestellte Ausführungsbeispiel einer Geberelement/Sensorelement-Kombination weist Abmessungen von nur etwa 2 mm × 3 mm × 7 mm bei einem Meßbereich 98 von 5 mm auf und stellt die maximal mögliche Miniaturisierung dar. Die Größe der Platte 16 entspricht im wesentlichen dem Meßbereich 98, da sie in ihrer ganzen Länge überfahren wird, wenn ein anderes Geberelement relativ zu dem Sensorteil 18 bewegt wird.

In Fig. 7 sind das Oberkiefer-Anschlußteil 44 und das Unterkiefer-Anschlußteil 22 in miteinander verbundenem Zustand dargestellt. Dieser Zustand besteht während des Aushärtens der Massen 10 und 48 an den Patientenzähnen. Nach dem Aufbringen und teilweisen Erhärten der Massen 48 bzw. 10 werden die beiden miteinander verbundenen Bißgabeln 14 und 50 in die Massen 10 und 48 eingeschoben.

Die Bißgabeln müssen in der Grundstellung exakt aufeinander ausgerichtet sein, da dies für die exakte Funktion der ernfindungsgemäßen Vorrichtung wichtig ist. Daher sind die Bißgabeln 14 und 50 mit einer Schraubverbindung miteinander verbunden. Der Abstand zwischen den Anschlußbereichen 16 und 52 wird über einen Abstandshalter 108 fest eingestellt, der sich bei der Montage der Bißgabeln aneinander zwischen die jeweiligen Anschlußbereiche 16 und 52 schieben läßt. Hierdurch läßt sich mit einfachen Mitteln ein starre und leicht lösbare Verbindung erreichen, denn zum Lösen der Verbindung und zur Montage des Sensorteils 18 und des Geberteils 46 an den Kieferanschlußteilen 22 und 44 müssen dann lediglich der Abstandshalter 108 herausgezogen und die Schraubverbindung 106 gelöst werden. Dies ist besonders dann günstig, wenn die Montage erfolgen soll, ohne daß die Kieferanschlußteile 22 und 44 Mund des Patienten entnommen werden.

In der verbundenen Stellung der Kieferanschlußteile 22 und 44 wird die erfindungsgemäße Vorrichtung an dem Artikulator angebracht. Damit ist die Grundstellung des Artikulators automatisch bekannt, und der Artikulator läßt sich leicht justieren.

Gemäß einer weiteren Ausgestaltung der Erfindung ist es vorgesehen, ein fünftes Sensorelement mit zugehörigem Geberelement an dem Meßpunkt des Sensors 28 anzuordnen. Dieses Sensorelement kann beispielsweise mittig unterhalb der Anschlagflächen 66a und 66b angeordnet werden, wobei diese dann etwas auseinandergezogen werden.

## Ansprüche

1. Vorrichtung zum Erfassen von Bewegungsparametern des Unterkiefers bei seiner Relativbewegung gegenüber dem Oberkiefer, mit mindestens einem Geberelement, das mit einem der Kiefer, über ein Kieferanschlußteil und ein Geberteil verbunden ist und auf mindestens drei Sensoren wirkt, die an dem anderen Kiefer über ein weiteres Kieferanschlußteil und ein Sensorteil angebracht sind, wobei die miteinander verbundenen Sensoren in räumlich fester Beziehung zueinander und außerhalb einer gemeinsamen Achse angeordnet sind, dadurch **gekennzeichnet,** daß mit zwei Sensoren (24, 26) je ein Meßwert und mit dem dritten (28) mindestens zwei Meßdaten in voneinander verschiedenen Erfassungsrichtungen erfaßbar sind und daß die Sensoren (24, 26, 28) je einen Meßbereich erfassen, der erheblich kleiner ist als die Strecke, die der Unterkiefer bei der Bewegung des Mundes von der Schließstellung in die maximale Öffnungsstellung zurücklegt.

2. Vorrichtung nach Anspruch 1, dadurch gekennzeichnet, daß der dritte Sensor (28) zwei Sensorelemente (40, 42) aufweist, mit denen Bewegungen des Unterkiefers gegenüber dem Oberkiefer in zwei Erfassungsrichtungen erfaßbar sind, und daß mindestens einer der beiden anderen Sensoren (24, 26) insbesondere beide, Bewegungen in der dritten Erfassungsrichtung erfassen.

3. Vorrichtung nach Anspruch 1 oder 2, dadurch gekennzeichnet, daß mindestens eine der Erfassungsrichtungen der Meßdaten abgebenden Sensorelemente seitlich (42) und mindestens eine frontal (40) ist und insbesondere in Inzisalbereich ein Sensorelement (42) mit einer seitlichen Erfassungsrichtung und im Molarbereich ein Sensorelement (40) mit vertikaler Erfassungsrichtung angeordnet ist.

4. Vorrichtung nach Anspruch 2 oder 3, dadurch gekennzeichnet, daß mit den drei Sensoren (24, 26, 28) vier Meßdaten erfaßbar sind und daß vier Sensorelemente (30, 32, 40, 42) vorgesehen sind, mit denen die Meßdaten abgebbar sind.

5. Vorrichtung nach einem der vorhergehenden Ansprüche, dadurch gekennzeichnet, daß seitlich neben den Molaren je ein Sensor (24, 26) vorgesehen ist, der ein Sensorelement (30, 32) aufweist, das Mundöffnungsrichtung wirksam ist.

6. Vorrichtung nach Anspruch 4 oder 5, dadurch gekennzeichnet, daß ein Gestänge zur Erfassung des Rotationszentrums eine Stange (45) od.dgl. aufweist, die seitlich an dem mit dem Unterkiefer-Anschlußteil (22) verbundenen Sensorteil (18) oder Geberteil (46) fixierbar ist.

7. Vorrichtung nach einem der Ansprüche 4, 5 und 6, dadurch gekennzeichnet, daß das Gestänge schwenkbeweglich und längenveränderlich an dem Unterkiefer-Anschlußteil (22) angebracht ist.

8. Vorrichtung nach einem der Ansprüche 1 bis 4, dadurch gekennzeichnet, daß fünf Sensorelemente für das Erfassen von fünf Meßdaten vorgesehen sind, daß die fünf Sensorelemente auf drei Sensoren verteilt sind und daß der Sensor insbesondere im Inzisalbereich drei Sensorelemente aufweist.

9. Vorrichtung nach einem der vorhergehenden Ansprüche, dadurch gekennzeichnet, daß das Sensorteil (18) mit dem Unterkiefer-Anschlußteil (22) und das Geberteil (46) mit dem Oberkiefer-Anschlußteil (44) verbunden ist.

10. Vorrichtung nach einem der vorhergehenden Ansprüche, dadurch gekennzeichnet, daß das Sensorteil (18) und das Geberteil (46) außerhalb des Mundraums angeordnet sind.

11. Vorrichtung nach einem vorhergehenden Ansprüche, dadurch gekennzeichnet, daß die Sensoren (24, 26, 28) Sensorelemente (30, 32, 40, 42) aufweisen, die eine translatorische Bewegung erfassen können, und daß jedes Sensorelement nur auf eine Bewegung in einer Richtung anspricht.

12. Vorrichtung nach einem der vorhergehenden Ansprüche, dadurch gekennzeichnet, daß die Sensorelemente (30, 32, 40, 42) so ausgerichtet sind, daß ihre Ansprechrichtungen ein rechtwinkliges Koordinatensystem bilden.

13. Vorrichtung nach Anspruch 12, dadurch gekennzeichnet, daß die Meßdaten von zwei Sensorelementen (30, 40; 32, 42; 30, 42; 32, 40; 40, 42), die zueinander im rechten Winkel angeordnet sind, einem XY-Aufzeichnungsgerät, insbesondere einem XY-Plotter, zugeführt werden.

14. Vorrichtung nach· einem der vorhergehenden Ansprüche, dadurch gekennzeichnet, daß bei einer Öffnungsbewegung des Mundes über den Meßbereich (98) mindestens des in Mundöffnungsrichtung wirksamen Sensors (24, 26) hinaus der Freibereich durchlaufen wird, in welchem eine Bewegung des Unterkiefers gegenüber dem Oberkiefer mindestens den in Mundöffnungsrichtung wirksamen Sensor (24, 26) nicht beeinflußt.

15. Vorrichtung nach Anspruch 14, dadurch gekennzeichnet, daß auch die in den anderen Richtungen wirksamen Sensoren (28) in dem Freibereich außer Eingriff geraten und keine Meßdaten abgeben.

16. Vorrichtung nach einem der vorhergehenden Ansprüche, dadurch gekennzeichnet, daß dem Geberteil (46) Geberelemente (62, 64, 74, 76) zugeordnet sind, von denen jedes auf je einen Sensor (24, 26, 28) wirkt, und daß die Geberelemente insbesondere an dem Sensorteil (18) geführt sind.

17. Vorrichtung nach Anspruch 16, dadurch gekennzeichnet, daß das Geberteil (46) ein Verbindungsteil (75) aufweist, an dem die Geberelemente (62, 64, 72, 74) lösbar geführt sind.

18. Vorrichtung nach Anspruch 17, dadurch gekennzeichnet, daß die Geberelemente (62, 64, 74, 76) an dem Verbindungsteil (75) je in der Erfassungsrichtung des Sensors spielfrei, in jeder anderen Richtung jedoch frei beweglich derart geführt sind, so daß eine Relativbewegung des Geberteils (46) gegenüber dem Sensorteil (18) zu einer Relativbewegung jedes Geberelementes (62, 64, 74, 76) gegenüber dem zugeordneten Sensorelement (30, 32, 40, 42) nur in der jeweiligen Erfassungsrichtung des Sensorelementes führt. -

19. Vorrichtung nach einem der Ansprüche 16 bis 18, dadurch gekennzeichnet, daß die Geberelemente (62, 64, 74, 76) an dem Sensorteil (18) translatorisch geführt werden und daß Anschläge (86, 82) vorgesehen sind, die die Bewegung der Geberelemente gegenüber dem Sensorteil begrenzen.

20. Vorrichtung nach Anspruch 19, dadurch gekennzeichnet, daß ein Anschlag durch das Sensorelement gebildet wird.

21. Vorrichtung nach einem der vorhergehenden Ansprüche, dadurch gekennzeichnet, daß als Sensorelemente magnetisch empfindliche Sensorelemente, insbesondere Hall-Sensorelemente (81), verwendet werden und daß die Geberelemente (62, 64, 74, 76) ferromagnetisches Material aufweisen.

22. Vorrichtung nach Anspruch 21, dadurch gekennzeichnet, daß der an dem Geberteil (46) anliegende Bereich des Geberelementes (62, 64, 74, 76) aus ferromagnetischem Material besteht und daß der an jedem Geberelement anliegende Bereich des Geberteils aus ferromagnetischem Material besteht.

23. Vorrichtung nach Anspruch 22, dadurch gekennzeichnet, daß jedes Geberelement (64) von dem an dem Geberteil (46) anliegenden Bereich (104) bis zu dem dem Sensorelement (81) gegenüber liegenden Bereich (Platte 92) durchgängig ferromagnetisches Material aufweist und daß entweder das Geberelement (64) oder zusätzlich der dem Geberelement (64) gegenüberliegende Bereich (60) des Geberteils (46) einen Permanentmagneten aufweist oder zusätzlich das Geberteil (46) einen zentralen Permanentmagneten aufweist, der über ferromagnetisches Material mit dem dem Geberelement gegenüberliegenden Bereich (60) des Geberteils (46) verbunden ist.

24. Vorrichtung nach einem der Ansprüche 16 bis 23 dadurch gekennzeichnet, daß das Geberteil (46) an jedem jedem Geberelement (62, 64, 74, 76) gegenüberliegenden Bereich eine Anschlagfläche (58, 60, 66, 68) aufweist, die eben ist und senkrecht zur Erfassungsrichtung des dem jeweiligen Geberelement zugeordneten Sensorelement (30, 32, 40, 42) ausgerichtet ist.

25. Vorrichtung nach Anspruch 24, dadurch gekennzeichnet, daß das an dem Geberteil (46) anliegende Ende (104) eines Geberelementes (64) ballig, insbesondere halbkugelförmig, ausgebildet ist.

26. Vorrichtung nach einem der Ansprüche 16 bis 25, dadurch gekennzeichnet, daß der dem Sensorelement (32) gegenüberlie gende Bereich des Geberelementes durch eine ferromagnetische Platte (92) gebildet wird, die sich senkrecht zur Erfassungsrichtung des jeweiligen Sensorelementes (32) erstreckt.

27. Vorrichtung nach einem der vorhergehenden Ansprüche, dadurch gekennzeichnet, daß die maximale Auslenkung des Geberelementes (62, 64, 76) gegenüber dem Sensorelement (30, 32, 42) 3 bis 10 mm, insbesondere 6 bis 7 mm, beträgt und daß in dem Meßbereich aufgrund der Ausbildung der Geberelemente (62, 64, 74, 76) das nichtlineare Ausgangssignal der Sensorelemente linearisiert wird.

28. Vorrichtung nach Anspruch 26 oder 27, dadurch gekennzeichnet, daß die Platte (92) als linearisierendes Element wirkt und daß keine zusätzlichen, mit dem Sensorelement (30, 32, 40, 42) oder mit dem Geberelement (62, 64, 74, 76) verbundenen linearisierenden Elemente vorgesehen sind.

29. Vorrichtung nach Anspruch 26 oder 27, dadurch gekennzeichnet, daß zur Vergrößerung des linearisierten Bereiches Flußführungsteile im wesentlichen in Erfassungsrichtung des Sensorelementes (32) angeordnet sind.

30. Vorrichtung nach einem der Ansprüche 16 bis 28, dadurch gekennzeichnet, daß das Geberelement (64) in seinem geführten Bereich einen verhältnismäßig dicken Rundstahl (Schaft 90) aufweist, der von einem aus nichtmagnetischem Material bestehenden Rahmen (78) des Sensorelementes (32) geführt wird.

31. Vorrichtung nach einem der vorhergehenden Ansprüche, dadurch gekennzeichnet, daß das Geberelement (64) federfrei durch magnetische Haltekraft an dem Geberteil (46) gehalten wird.

32. Vorrichtung nach einem der Ansprüche 1 bis 29, dadurch gekennzeichnet, daß die Geberelemente (74) oder die Sensorelemente (42a, 42b) die die seitliche Bewegung des Unterkiefers gegenüber dem Oberkiefer erfassen, zusätzlich federbelastet gleitbeweglich derart geführt sind, so daß eine seitliche Bewegung des Unterkiefers über den Meßbereich (98) hinaus zerstörungsfrei möglich ist.

33. Vorrichtung nach einem der vorhergehenden Ansprüche, dadurch gekennzeichnet, daß der für die Erfassung der seitlichen und der frontalen Unterkieferbewegung zuständige Sensor (28) ein in Frontalrichtung wirkendes Sensorelement (40) und zwei in seitlicher Richtung wirkende Sensorelementteile (42a, 42b) aufweist und daß die seitlichen Sensorelementteile je aneinander angrenzende Meßbereiche aufweisen und ein Sensorelement (42) bilden.

34. Vorrichtung nach Anspruch 33, dadurch gekennzeichnet, daß den die seitliche Kieferbewegung erfassenden Sensorelementteilen (42a, 42b) ein gemeinsames, in der Mitte zwischen den Sensorelementteilen (42a, 42b) angeordnetes Geberelement (74) zugeordnet ist.

35. Vorrichtung nach einem der Ansprüche 32 bis 34, dadurch gekennzeichnet, daß die auf die seitliche Kieferbewegungen ansprechenden Sensorelementteile (42a, 42b) elektrisch abwechselnd in Abhängigkeit davon aktiviert werden, zu welchem der Sensorelementteile (42a, 42b) das Geberelement (74) näher ist.

36. Vorrichtung nach Anspruch 35, dadurch gekennzeichnet, daß ein Umschalt-Schaltkreis für die auf die seitliche Bewegung des Unterkiefers ansprechenden Sensorelementteile (42a, 42b) vorgesehen ist, mit welchem auf das Sensorelement umgeschaltet wird, das die höhere Spannung abgibt und daß die Kennlinie des einen Sensorelementteiles gegenüber derjenigen des anderen gespiegelt wird.

37. Vorrichtung nach einem der vorhergehenden Ansrüche, dadurch gekennzeichnet, daß für das Geberteil (46) und das Sensorteil (18) Leichtbauweise angewendet wird, daß die sich vor dem Mund erstreckende Länge des Geberteils (46) und des Sensorteils (18) sowie das Gewicht dieser Teile nach Möglichkeit gering gehalten werden und daß der Abstand der Sensorelemente untereinander möglichst gering gewählt wird, ohne daß die Sensorelemente (30, 32, 40, 42) einander beeinflussen können.

- 38. Verfahren zur Erfassung von Bewegungsparametern des Unterkiefers bei seiner Relativbewegung gegenüber dem Oberkiefer, bei dem mindestens ein mit einem der Kiefer über ein Kieferanschlußteil und ein Geberteil verbundenes Geberelement auf mindestens 3 Sensoren wirkt, die an dem anderen Kiefer über ein weiteres Kieferanschlußteil und ein Sensorteil angebracht sind, bei dem die miteinander verbundenen Sensoren in räumlich fester Beziehung außerhalb einer gemeinsamen Achse angeordnet sind, die Messung durch Bewegung des Unterkiefers gegenüber den Oberkiefer erfolgt und nach Abschluß der Messung die Kieferanschlußteile dem Mund des Patienten entnommen und an einem Artikulator angebracht werden, der zur Herstellung von Zahnersatz für diesen Patienten dient, dadurch gekennzeichnet, daß mit zweien der Sensoren ein Meßwert und mit dem dritten mindestens zwei Meßdaten in verschiedenen Erfassungsrichtungen erfaßt werden und daß der Patient bei der Messung den Unterkiefer gegenüber dem Oberkiefer in nahezu geschlossener oder in geschlossener Stellung des Mundes, also im wesentlichen nur in Horizontalrichtung, bewegt.

39. Verfahren nach Anspruch 38, dadurch gekennzeichnet, daß die Lage des Rotationszentrums der Kondylen und/oder die Gelenkbahnneigung durch ein Gestänge ermittelt werden, das die Bewegung eines mit dem Unterkieferanschlußteil verbundenen Punktes seitlich neben den Kondylen gegenüber einem kopffesten Teil festhält.

40. Verfahren nach Anspruch 39, dadurch gekennzeichnet, daß zur Bestimmung der Gelenkbahnneigung von einem an den Punkt seitlich neben den Kondylen angebrachten, mit dem Gestänge verbundenen Schreibgerät die Bewegung des Punktes auf dem kopffesten Teil aufgezeichnet wird und daß die Gelenkbahnneigung durch eine um den Punkt drehbare, eine Linie aufweisende und einstellbare Schablone dargestellt wird.

41. Verfahren nach einem der Ansprüche 38 bis 40, dadurch gekennzeichnet, daß die Kieferanschlußteile patientenspezifisch hergestellt werden, indem in an sich bekannter Weise aushärtende, physiologisch unbedenkliche Masse die Zahnreihen und/oder Kiefer umschließend aufgebracht wird, daß vor der vollständigen Aushärtung in die Masse eine Oberkiefer-Bißgabel und eine Unterkiefer-Bißgabel eingeschoben wird und daß die Masse und die zugehörige Bißgabel je das Kieferanschlußteil bilden.

42. Verfahren nach Anspruch 41, dadurch gekennzeichnet, daß die Bißgabeln in miteinander verbundenem Zustand in die Masse eingeschoben werden.

43. Verfahren nach einem der Ansprüche 41 oder 42, dadurch gekennzeichnet, daß zur Messung nach Aushärtung der insbesondere aus Kunststoff bestehenden Masse die Fixierung der Kieferanschlußteile aneinander gelöst wird und mit den Kieferanschlußteilen das Geberteil bzw. das Sensorteil verbunden werden und daß die Kieferanschlußteile erst dem Mund des Patienten entnommen werden, wenn die Messung abgeschlossen ist und die Kieferanschlußteile unbeschädigt verbleiben.

44. Verfahren nach einem der Ansprüche 41 oder 42, dadurch gekennzeichnet, daß die Kieferanschlußteile vor der Messung entnommen und gesäubert werden und daß zur Messung die mit dem Geberteil bzw. mit dem Sensorteil verbundenen Kieferanschlußteile erneut in den Mund des Patienten eingeführt werden.

45. Verfahren nach einem der Ansprüche 38 bis 44, dadurch gekennzeichnet, daß beim Einsetzen der Kieferanschlußteile in den Artikulator ein Vorjustage durch die erneute Herstellung der festen Verbindung zwischen den beiden Kieferanschlußteilen vorgenommen wird.

0 288 682

Fig.1

Fig.2

Fig. 3

Fig. 4

Fig. 5

**Fig. 6**

**Fig. 7**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 014 097 (PAMEIJER) <br> * Beschreibung; Figuren * <br><br> --- | 1,2,4,6,9-13, 32,33, 37-39, 41,42, 44 | A 61 C 19/04 |
| A | US-A-3 390 459 (SEIDENBERG) <br> * Beschreibung; Figuren 2,4,7 * <br><br> --- | 1,2,8, 10,11, 33,34 | |
| A | US-A-3 256 523 (DE PIETRO) <br> * Beschreibung; Figuren * <br><br> ----- | 1,2,6,8,11,12, 16,17-20,24, 27,30, 37-41 | |

RECHERCHIERTE SACHGEBIETE (Int. Cl.4)

A 61 C

Der vorliegende Recherchenbericht wurde für alle Patentansprüche erstellt

| Recherchenort | Abschlußdatum der Recherche | Prüfer |
|---|---|---|
| DEN HAAG | 09-06-1988 | VANRUNXT J.M.A. |